Europäisches Patentamt

European Patent Office

Office européen des brevets

(11) Publication number: **0 544 347 A1**

## EUROPEAN PATENT APPLICATION

(21) Application number: **92203349.3**

(22) Date of filing: **30.10.92**

(51) Int. Cl.5: **A01N 57/34**, B27K 3/50,
//(A01N57/34,37:02)

(30) Priority: **27.11.91 CH 3479/91**

(43) Date of publication of application:
**02.06.93 Bulletin 93/22**

(84) Designated Contracting States:
**DE ES FR GB PT SE**

(71) Applicant: **FMC CORPORATION (UK) LIMITED
Tennax Road, Trafford Park
Manchester M17 1WT(GB)**

(72) Inventor: **Grade, Reinhardt
Tulpenweg 11
W-6140 Bensheim(DE)**

(74) Representative: **W.P. Thompson & Co.
Coopers Building, Church Street
Liverpool L1 3AB (GB)**

(54) Composition for protecting timber from fungal growth.

(57) The invention relates to a composition for protecting timber, especially freshly sawn timber, against growth by blue-stain and mold fungi.

The novel composition is a formulation comprising at least one quaternary phosphonium compound of formula $[(C_4H_9)_3P \ C_nH_{2n+1}]^+ \ X^-$ or $[(C_4H_9)_3P \ C_nH_{2n+1}]_2^+SO_4^{2-}$, wherein n is an integer from 8 to 16 and $X^-$ is an anion selected from the group consisting of $F^-$, $Cl^-$, $Br^-$, $I^-$, $NO_3^-$ and $HSO_4^-$, and at least one alkali metal salt of an aliphatic $C_6$-$C_{12}$ monocarboxylic acid.

Rank Xerox (UK) Business Services
(3. 10 / 3.6 / 3.3. 1)

EP 0 544 347 A1

The present invention relates to a composition for protecting timber against growth by blue-stain fungi and mold fungi, to the use of said composition, and to a method of protecting timber against growth by blue-stain fungi and mold fungi.

The fungi which infect timber are subdivided into the three groups comprising blue-stain fungi, mold fungi and rot fungi. Although blue-stain fungi and mold fungi do not cause rot, they do cause discolouration and are able to promote the growth of the fungi which rot wood (Basidiomycetes).

The most widely used control agent in this sector is still sodium pentachlorophenol. However, the use of this biocide is disputed on account of its presumed negative environmental impact. More recent compounds, such as methylenebisthiocyanate and 2'-(thiocyanomethylthio)benzothiazole (TCMTB), have various serious shortcomings, including insolubility in water, temperature instability or corrosiveness. The most widely used product in the USA, Kopcoat NP-1®, comprising 64.8% of a quaternary ammonium compound and 7.6% of 3-iodo-2-propynylbutylcarbamate (IPBC), also has the drawback that the IPBC component is poorly soluble in water, so that large amounts of the other biocide have to be used.

A useful biocide for controlling fungal growth on freshly sawn timber should be fully water-soluble so as to avoid any precipitation when dilutions are used or where adsorption on the wood varies. In addition, the biocide should not cause discolouration of the wood or interfere with its further processing, and it must adhere to the surface of the wood with sufficient tenacity so as not to be washed off by, for example, rain.

Some of these requirements are met by quarternary ammonium salts which have long been used as wood preservatives [B.A. Richardson, Sapstain Control, Paperi ja puu Nr. 10, S. 613 (1972)]. The usefulness of aliphatic $C_6$-$C_{11}$ monocarboxylic acids is also known in this connection [q.v. US-A-3 995 077 and US-A-4 380 561].

A synergistic composition comprising a quarternary ammonium compound and an alkali metal salt of an organic carboxylic acid is disclosed in US-A-4 585 795 as a wood preservative for inhibiting growth by blue-stain fungi and mold fungi. This composition is able to effect an enhanced action over that obtained by using the individual substances.

Quarternary phosphonium compounds are also known to have biocidal activity. Thus EP-A-332 578 teaches the use of a number of tetraalkylammonium and tetraalkylphosphonium salts, including tri-n-butyl-n-tetradecylphosphonium tetrafluoroborate, as biocides.

The activity of a number of tetraalkylphosphonium bromides and chlorides, including tri-n-butyl-n-tetradecylphosphonium chloride, as microbicides for water treatment is disclosed in US-A-4 874 526.

Surprisingly, it has now been found that the combination of a quarternary phosphonium compound with the salt of an organic carboxylic acid significantly enhances toxicity to fungi. The invention accordingly relates to a composition comprising such a combination which can be used with advantage for protecting timber, especially freshly sawn timber, against growth by blue-stain fungi and mold fungi.

The novel composition is a mixture comprising at least one quaternary phosphonium compound of formula $[(C_4H_9)_3P\ C_nH_{2n+1}]^+\ X^-$ or $[(C_4H_9)_3P\ C_nH_{2n+1}]_2^+\ SO_4{}^{2-}$, wherein n is an integer from 8 to 16 and $X^-$ is an anion selected from the group consisting of $F^-$, $Cl^-$, $Br^-$, $I^-$, $NO_3{}^-$ and $HSO_4{}^-$, and at least one alkali metal salt of an aliphatic $C_6$-$C_{12}$ monocarboxylic acid.

The aliphatic $C_6$-$C_{12}$ monocarboxylic acid may be selected from the group consisting of capronic acid, heptanoic acid, caprylic acid, capric acid, lauric acid, 2-ethylhexanoic acid, 2-ethylheptanoic acid, and mixtures of isomers such as isooctanoic acid or isononanoic acid.

Those compositions are preferred in which the aliphatic monocarboxylic acid is selected from the group consisting of 2-ethylhexanoic acid, isononanoic acid, isooctanoic acid, 2-ethylheptanoic acid, heptanoic acid, capric acid and caprylic acid. Compositions containing 2-ethylhexanoic acid are especially preferred.

Particularly useful alkali metal salts are the sodium, potassium and lithium salts. The sodium and potassium salts are preferred, and the sodium salt is most preferred.

The alkali metal salt can be added per se to the novel composition. Alternatively, the acid and the basic alkali metal compound which forms the salt with the acid may also be added separately. In this latter case, a hydroxide carbonate or hydrogencarbonate of an alkali metal will conveniently be used, preferably an alkali metal hydroxide, such as NaOH. Acid and alkali metal compound will preferably be added in equivalent amounts. An excess of one or other component can serve to adjust the pH to the desired value.

The butyl groups of the phosphonium compound may be straight-chain or branched. n-Butyl is preferred.

The long chain alkyl group $C_nH_{2n+1}$ of the phosphonium compound may also be straight-chain or branched. Typical examples of such groups include 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl or hexadecyl. The long chain alkyl groups may also be mixtures of isomers. Also possible are mixtures of alkyl groups of different chain length, for example if customary technical mixtures of alkyl halides and alcohols are used for the preparation of the phosphonium compounds.

Preferred compositions are those wherein the long chain alkyl group $C_nH_{2n+1}$ of the phosphonium compound contains from 10 to 16 carbon atoms and is preferably a dodecyl or a tetradecyl group. A tetradecyl group is especially preferred.

Also preferred are compositions in which the quaternary phosphonium compounds have the formula [-$(C_4H_9)_3P$ $C_nH_{2n+1}]^+Cl^-$.

Particularly preferred compositions are those wherein the phosphonium compound is tributylphosphoniumtetradecyl chloride.

It is especially advantageous to use the novel compositions for temporarily protecting freshly sawn timber, i.e. for inhibiting fungal growth until the timber is processed.

The invention likewise relates to compositions which, in addition to the aforementioned active ingredients, also contain conventional formulation auxiliaries. Preferred formulation auxiliaries are water, alcohols, free carboxylic acids, including the aliphatic monocarboxylic acids cited above, and/or bases. The compositions will preferably contain an alkali metal hydroxide as base, preferably NaOH. The alcohol will conveniently be a $C_1$-$C_4$ alkanol. A novel composition will typically be prepared by mixing

(a) 13.4 - 14.5 % of NaOH,

(b) 19 - 22 % of water

(c) 48 - 52 % of an aliphatic monocarboxylic acid

(d) 0 - 2 % of an alcohol containing 2-4 carbon atoms, and

(e) 14 - 16 % of a 50 % aqueous solution of phosphonium compound. In (a) to (e) above and throughout this specification, the percentages are by weight, unless otherwise indicated. Particularly preferred compositions are those wherein component (c) is 2-ethylhexanoic acid, component (d) is isopropanol, and component (e) is a solution of tributylphosphoniumtetradecyl chloride.

Some of the compounds used for the preparation of the composition, for example the phosphonium halide and the carboxylic acid salt, are known and are commercially available.

The phosphonium compounds present in the novel compositions can be prepared in a manner known per se. The procedure typically comprises reacting appropriate phosphonium halides with salts, such as alkali metal salts, which contain the desired anions, to give the corresponding phosphonium salts of this invention in which $X^-$ is not a halide. Typically, sodium nitrate can be reacted with a quarternary phosphonium halide $(C_4H_9)_3P$ $C_nH_{2n+1}$ Hal (Hal = halogen). The reaction conditions are not critical and the reaction can be carried out under normal pressure and at room temperature and with water as solvent. Working up is also carried out by per se known methods, and the reaction products can be extracted with an organic solvent and obtained in pure form after removal of the solvent by distillation. Suitable solvents are dichloromethane or ethyl acetate. The starting materials are also known per se and some are commercial products.

Corresponding phosphonium hydrogensulfates can be obtained typically by reacting the rhodanides with concentrated sulfuric acid, accompanied by evolution of COS. Working up is then conveniently carried out by stirring in ice-water and thereafter stripping off volatile constituents under vacuum. The rhodanides may be obtained by the method described above in connection with the nitrates.

The salt of the aliphatic monocarboxylic acid can be used either per se or formed from the corresponding free acid and a suitable alkali metal compound, such as an alkali metal hydroxide. The novel composition is conveniently obtained initially in the form of a concentrate with contains the phosphonium compound in a concentration of 1 to 40 % by weight and the alkali metal carboxylate in a concentration of 10 to 90 % by weight. The composition is conveniently prepared by mixing the individual components, preferably by dissolving the active ingredients (or their precursors, carboxylic acid and, preferably, alkali metal hydroxide in the case of the carboxylate) in water, with or without the addition of an alcohol. The weight ratio of phosphonium compound:free carboxylic acid in the novel compositions is conveniently 1:1 to 1:50, preferably 1:4 to 1:10. The composition is preferably used in dilutions which contain 0.05 to 5% by weight, preferably 0.1 to 1.5% by weight, of the phosphonium compound.

The invention further relates to the use of the cited quaternary phosphonium compounds of formula [-$(C_4H_9)_3P$ $C_nH_{2n+1}]^+$ $X^-$ or [$(C_4H_9)_3P$ $C_nH_{2n+1}]_2^+$ $SO_4^{2-}$ in combination with alkali metal salts or aliphatic $C_6$-$C_{12}$monocarboxylic acids for protecting timber against growth by blue-stain fungi and mold fungi. The use of aqueous solutions of the combination formulation is preferred.

The invention relates further to a process for protecting timber against growth by blue-stain fungi and mold fungi, which comprises treating said timber with a solution of suspension which contains the quaternary phosphonium compound of formula [$(C_4H_9)_3P$ $C_nH_{2n+1}]^+$ $X^-$ or [$(C_4H_9)_3P$ $C_nH_{2n+1}]_2^+$ $SO_4^{2-}$, wherein n and $X^-$ are as defined above, and an alkali metal salt of an aliphatic $C_6$-$C_{12}$monocarboxylic acid.

3

A process which comprises the use of an aqueous solution is preferred. In the process of this invention, the timber to be protected is conveniently impregnated with a solution of both active ingredients. This can be done, for example, by immersing the timber in, or spraying it, with the cited solution or solutions.

Use Example

Tests for determining the protective action against fungal growth are carried out using freshly sawn timber in accordance with NWPC Standard 1.4.1.3./79 (Nordic Wood Preservation Council, Mycological Testing of Anti-stain Preservatives for Freshly Sawn Timber, the Mini-board Method, Sweden 1980). A novel formulation of the following composition is used:
13.9% of a NaOH,
20.3% of a water
50.0% of 2-ethylhexanoic acid
0.8% of isopropanol and
15.0% of a 50% solution of tributylphosphoniumtetradecyl chloride in water.
The solutions listed in Table 1 are prepared by diluting this concentrate (= 100%) with water.
One half of test pine boards (10 x 50 x 300 mm) is immersed for 60 seconds in each solution, dried for 24 hours and inoculated with the following mixed cultures:

mixed culture of blue-stain fungi:  Aureobasidium pullulans,
                                    Sclerophoma pityophila,
                                    Ceratocystis pilifera;
mixed culture of mold fungi:        Aspergillus niger,
                                    Cladosporium herbarum,
                                    Trichoderma viride.

The inoculated boards are incubated at room temperature. After 4 weeks the growth is compared on the treated and untreated sides and evaluated according to the following scale:
0 = free from fungal growth
1 = traces of growth
2 = little growth
3 = moderate growth
4 = vigorous to maximum growth
The results are reported in Table 1.

**Table 1:** Degree of fungal growth after 4 weeks.  Comparison with/without the treatment of this invention (immersion in 4.0% and 5.0% aqueous solution of the concentrate).

| Percentage of concentrate | Blue-stain growth | | Mold growth | |
|---|---|---|---|---|
| | untreated half | treated half | untreated half | treated half |
| 4.0 | 3 | 0 | 3 | 0 |
| 5.0 | 4 | 0 | 4 | 0 |

It is evident from the table that the novel formulation affords excellent protection against growth by the mold and blue-stain fungi investigated in this test.

4

**Claims**

1.  A composition for protecting timber against growth by blue-stain fungi and mold fungi, comprising at least one quaternary phosphonium compound of formula $[(C_4H_9)_3P \, C_nH_{2n+1}]^+ \, X^-$ or $[(C_4H_9)_3P \, C_nH_{2n+1}]2^+ \, SO_4{}^{2-}$, wherein n is an integer from 8 to 16 and $X^-$ is an anion selected from the group consisting of $F^-$, $Cl^-$, $Br^-$, $I^-$, $NO_3{}^-$ and $HSO_4{}^-$, and at least one alkali metal salt of an aliphatic $C_6$-$C_{12}$ monocarboxylic acid.

2.  A composition according to claim 1, wherein the aliphatic monocarboxylic acid is selected from the group consisting of 2-ethylhexanoic acid, isononanoic acid, isooctanoic acid, 2-ethylheptanoic acid, heptanoic acid, capric acid and caprylic acid.

3.  A composition according to claim 1, wherein n is an integer from 10 to 16.

4.  A composition according to claim 1, wherein the quaternary phosphonium compound has the formula $[(C_4H_9)_3P \, C_nH_{2n+1}]^+ \, Cl^-$.

5.  A composition according to claim 4, wherein the phosphonium compound is tributylphosphoniumtetradecyl chloride.

6.  A composition according to claim 1, wherein the alkali metal carboxylate is the sodium salt of 2-ethylhexanoic acid.

7.  A composition according to claim 1 for temporarily protecting freshly sawn timber.

8.  A composition according to claim 1, which comprises conventional formulation auxiliaries.

9.  A composition according to claim 8, which comprises water, alcohol and/or bases.

10. A composition according to claim 9, wherein the base is sodium hydroxide.

11. A composition according to claim 1, wherein the weight ratio of phosphonium compound:free carboxylic acid is 1:1 to 1:50, preferably 1:4 to 1:10.

12. Use of a quaternary phosphonium compound of formula $[(C_4H_9)_3P \, C_nH_{2n+1}]^+ \, X^-$ or $[(C_4H_9)_3P \, C_nH_{2n+1}]_2{}^+SO_4{}^{2-}$, wherein n and $X^-$ are as defined in claim 1, in combination with an alkali metal salt of an aliphatic $C_6$-$C_{12}$ monocarboxylic acid, for protecting timber against growth by blue-stain and mold fungi.

13. Use according to claim 12 of an aqueous solution of the combination formulation.

14. A process for protecting timber against growth by blue-stain and mold fungi, which comprises treating said timber with a solution or dispersion which comprises a quaternary phosphonium compound of formula $[(C_4H_9)_3P \, C_nH_{2n+1}]^+ \, X^-$ or $[(C_4H_9)_3P \, C_nH_{2n+1}]_2{}^+SO_4{}^{2-}$, wherein n and $X^-$ are as defined in claim 1, and an alkali metal salt of an aliphatic $C_6$-$C_{12}$ monocarboxylic acid.

15. A process according to claim 14, wherein an aqueous solution is used.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A D | FR-A-2 523 404 (KYMI KYMMENE OY) & US-A-4 585 795 --- | 1-15 | A01N57/34 B27K3/50 //(A01N57/34, |
| A | EP-A-0 258 737 (HENKEL) * claims 1,4-6,11 * ----- | 1-15 | 37/02) |

TECHNICAL FIELDS SEARCHED (Int. Cl.5)

A01N
B27K

The present search report has been drawn up for all claims

| Place of search | Date of completion of the search | Examiner |
|---|---|---|
| THE HAGUE | 16 MARCH 1993 | DECORTE D.M. |